# EUROPEAN PATENT APPLICATION

(11) **EP 4 769 076 A1**
(43) Date of publication of application: **01.07.2026**
(21) Application number: 25190097.3
(22) Date of filing: 17.07.2025
(51) Int. Cl.: G06F 3/01, G06F 9/451, G06F 3/00, G06F 3/14

(54) **METHOD AND APPARATUS FOR DISPLAYING SERVICE WIDGET, ELECTRONIC DEVICE, MEDIUM AND PROGRAM PRODUCT**

(30) Priority: 24.12.2024 CN 202411919334
(71) Applicant: Beijing Xiaomi Mobile Software Co., Ltd., Beijing 100085 (CN)
(72) Inventor: ZHOU, Bingqing, Beijing, 100085 (CN); DONG, Junjie, Beijing, 100085 (CN)
(74) Representative: Dehns Germany Partnerschaft mbB

(57) **Abstract**

The present disclosure relates to a method and apparatus for displaying a service widget, an electronic device, a medium and a program product. The method includes: obtaining widget package content of a service widget to be displayed, where the widget package content includes a widget file and a display configuration file, the widget file includes description information of a display template of the service widget, and the display configuration file includes data source information and refresh frequency information of the service widget; and displaying the service widget based on the widget package content.

## Description

### TECHNICAL FIELD

The present disclosure relates to the technical field of electronic devices, and in particular to a method and apparatus for displaying a service widget, an electronic device, a medium and a program product.

### BACKGROUND

A service widget is a form for presentation of important and brief information of an application. The service widget is used on a variety of devices, including mobile phones, tablets, wearable devices, smart home devices, etc. For example, the service widget can be displayed on a desktop, a negative first screen, or a lock screen of a mobile phone, allowing users to view information at any time without having to enter the application.

In the related art, when coding program codes of the service widget, a User Interface (UI) expression and logic of each item of data to be displayed in the service widget are unified into an Extensible Markup Language (XML) node. Therefore, when displaying the service widget, it is necessary to separate the UI and logic related descriptions from each XML node, and then render the UI and execute the logic separately according to the descriptions, which makes the display process relatively complicated and inflexible.

### SUMMARY

The present disclosure provides a method and apparatus for displaying a service widget, an electronic device, a medium and a program product.

According to a first aspect of an embodiment of the present disclosure, a method for displaying a service widget is provided, the method including:
obtaining widget package content of a service widget to be displayed; where the widget package content includes a widget file and a display configuration file, the widget file includes description information of a display template of the service widget, and the display configuration file includes data source information and refresh frequency information of the service widget; and
displaying the service widget based on the widget package content.

In some embodiments, the description information includes at least one of template information, style information and data format information, the template information is used to characterize a component in the service widget; the style information is used to characterize a style of the component in the service widget; and the data format information is used to characterize a format of data in the service widget.

In some embodiments, the data source information includes a target interface, which is an interface for obtaining data displayed in the service widget; the refresh frequency information includes at least one of a preset time duration for data refreshing of the service widget and a preset time for scheduled data refreshing.

In some embodiments, when a provider of data displayed in the service widget is a first application, the target interface is an interface for obtaining data from the first application, the data source information further includes application information of the first application, and the application information includes an application identifier and version information;
when a provider of the data displayed in the service widget is an application server of the first application program, the target interface is an interface for obtaining data from the application server.

In some embodiments, obtaining the widget package content of the service widget to be displayed includes:
generating a widget display instruction and sending the widget display instruction to a widget running engine by a second application; where the second application is an application for managing the service widget; and
obtaining, by the widget running engine, the widget package content from a preset server in response to the widget display instruction; where the preset server stores the widget package content of each service widget of a plurality of service widgets.

In some embodiments, displaying the service widget based on the widget package content includes:
generating a rendering instruction based on the widget package content and send the rendering instruction to the second application by the widget running engine; where the rendering instruction includes information required for displaying the service widget; and
in response to the rendering instruction, rendering the service widget to obtain the rendered service widget and displaying the rendered service widget by the second application.

In some embodiments, generating the rendering instruction based on the widget package content includes:
parsing the widget package content to obtain the widget file and the display configuration file;
obtaining target data to be displayed in the service widget based on the display configuration file; and
generating the rendering instruction based on the target data and the widget file.

In some embodiments, the data source information includes a target interface, the target interface is an interface for obtaining the data displayed in the service widget; and obtaining the target data to be displayed in the service widget based on the display configuration file includes:
calling the target interface according to the refresh frequency information to obtain the target data from a first application or an application server of the first application.

In some embodiments, generating the rendering instruction based on the target data and the widget file includes:
merging the target data into the display template to obtain a template to be rendered; and
generating the rendering instruction based on the template to be rendered.

In some embodiments, the display configuration file further includes size information of the service widget; and generating the rendering instruction based on the template to be rendered includes:
generating the rendering instruction based on the size information and the template to be rendered.

According to a second aspect of an embodiment of the present disclosure, an apparatus for displaying a service widget is provided, the apparatus including:
a content obtaining module, configured to obtain widget package content of a service widget to be displayed; where the widget package content includes a widget file and a display configuration file, the widget file is used to describe a display template of the service widget, and the display configuration file is used to describe a data source, a refresh frequency and a widget size of the service widget; and
a display module, configured to display the service widget based on the widget package content.

According to a third aspect of an embodiment of the present disclosure, there is provided an electronic device, including:
a processor; and
a memory configured to store instructions executable by the processor;
where the processor is configured to perform the method for displaying the service widget as described in the first aspect of the embodiments of the present disclosure.

According to a fourth aspect of an embodiment of the present disclosure, a non-transitory computer-readable storage medium is provided, where instructions in the storage medium, when being executed by a processor of an electronic device, enable the electronic device to perform the method for displaying the service widget as described in the first aspect of the embodiments of the present disclosure.

According to a fifth aspect of an embodiment of the present disclosure, a computer program product is provided, including a computer program which, when being executed by a processor, implements the method for displaying the service widget as described in the first aspect of the embodiments of the present disclosure.

The above methods of the present disclosure have the following beneficial effects.

With the methods provided by the embodiments of the present disclosure, since widget package content of a service widget includes a widget file and a display configuration file, the widget package content includes a widget file and a display configuration file, the widget file including description information of a display template of the service widget, and the display configuration file including data source information and refresh frequency information of the service widget, and various information required for displaying the service widget is compiled in the widget package content, when displaying the service widget, it needs not to separate the UI and logic related descriptions from the widget package content and render the UI and execute the logic separately according to the descriptions, but instead the display can be performed directly based on the widget package content, which makes the display process of the service widget simpler and more flexible.

It is to be understood that the foregoing general description and the following detailed description are illustrative and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a flow chart showing a method for displaying a service widget according to an illustrative embodiment;
FIG. 2 is a flow chart showing a method for displaying a service widget according to an illustrative embodiment;
FIG. 3A is a schematic diagram of a service widget according to an illustrative embodiment;
FIG. 3B is a schematic diagram of a service widget according to an illustrative embodiment;
FIG. 3C is a schematic diagram of a service widget according to an illustrative embodiment;
FIG. 4 is a flow chart showing a method for displaying a service widget according to an illustrative embodiment;
FIG. 5 is a block diagram showing an apparatus for displaying a service widget according to an illustrative embodiment; and
FIG. 6 is a block diagram showing an electronic device according to an illustrative embodiment.

### DETAILED DESCRIPTION

Illustrative embodiments will be described in detail herein, examples of which are shown in the accompanying drawings. When the following description refers to the drawings, the same numbers in different drawings represent the same or similar elements unless otherwise indicated. The embodiments described in the following illustrative embodiments do not represent all embodiments consistent with the present disclosure. Instead, they are merely examples of devices and methods consistent with some aspects of the present disclosure as detailed in the appended claims.

In the related art, when compiling program codes of the service widget, the UI expression and logic of each item of data to be displayed in the service widget are unified into an XML node. Therefore, when displaying the service widget, it is necessary to separate the UI and logic related descriptions from each XML node, and then render the UI and execute the logic respectively according to the descriptions, which makes the display process more complicated and inflexible.

With the method for displaying a service widget provided in the embodiments of the present disclosure, since the widget package content of the service widget includes a widget file and a display configuration file, the widget package content including a widget file and a display configuration file, the widget file including description information of a display template of the service widget, the display configuration file includes data source information and refresh frequency information of the service widget, and various information required for displaying the service widget is compiled in the widget package content, when displaying the service widget, there is no need to separate the UI and logic related descriptions from the widget package content and render the UI and execute the logic separately according to the descriptions, but instead the display can be performed directly based on the widget package content, which makes the display process of the service widget simpler and more flexible.

The method for displaying the service widget provided in the embodiments of the present disclosure is performed by an electronic device, which may be a mobile phone, a tablet computer, a wearable device, a smart home device, a car terminal, or other devices that can display the service widget.

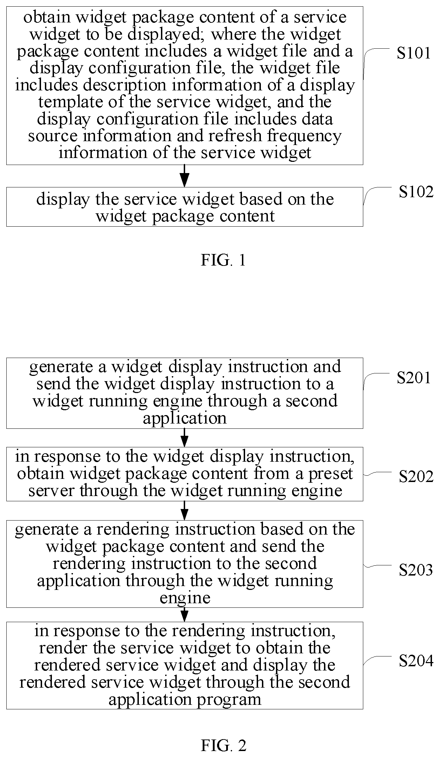

FIG. 1 is a flow chart of a method for displaying a service widget according to an illustrative embodiment, which is performed by an electronic device. Referring to FIG. 1, the method includes the following steps.

Step S101, widget package content of a service widget to be displayed is obtained; where the widget package content includes a widget file and a display configuration file, the widget file includes description information of a display template of the service widget, and the display configuration file includes data source information and refresh frequency information of the service widget.

The widget package content is compiled based on a preset grammar, which may be a quick application grammar, a quick application-like grammar, or other grammar that is easy to read and write, and the preset grammar does not include javascript (JS, a computer programming language) grammar. The widget package content is used to describe the service widget, and the widget package content includes a widget file and a display configuration file. The widget file includes description information of a display template of the service widget, and the display configuration file includes data source information and refresh frequency information of the service widget.

In some embodiments, the description information includes at least one of template information, style information, and data format information. The template information is used to characterize a component(s) in the service widget, which is the component(s) used in rendering the service widget; the style information is used to characterize a style of the component(s) in the service widget, which includes a display position, a shape, a size, etc. of the component(s); the data format information is used to characterize a format of the data in the service widget, which includes a display position, a font size, etc. of the data in the service widget. Optionally, the various information included in the description information can be compiled in the same grammar or in different grammars.

In some embodiments, the data source information includes a target interface, which is an interface for obtaining data displayed in the service widget. When the service widget is displayed, the target interface can be called to obtain the data displayed in the service widget.

Optionally, when a provider of the data displayed in the service widget is a first application, the data source information also includes application information, the application information includes an application identifier and version information of the first application, the application identifier may be an application package name of the first application or other identifiers representing the first application, the version information refers to a minimum version number of the first application that can be used to provide the data, the target interface is an interface for obtaining the data from the first application, the target interface may be a Uniform Resource Identifier (Uri), for example, the target interface may be in the form of "content:// × × × . × × × . × × ". When the provider of the data displayed in the service widget is an application server of the first application, the target interface is an interface for obtaining data from the application server, for example, the target interface may be in the form of "http/https//× × × . × × × . × × ". In this case, the data source information may include the application information or may not include the application information. The first application may be a weather application, a music player application, a shopping application, or the like.

In some embodiments, the refresh frequency information includes at least one of a preset time duration (interval) for data refreshing of the service widget and a preset time for scheduled data refreshing. There may be multiple preset times, for example, the preset time duration may be 10 seconds, 30 seconds or other time duration, and the preset time may be 24:00, 18:00, 12:00, 6:00, etc. It should be noted that if the time duration between two exposures of the service widget is less than the preset time duration, the data displayed in the service widget will not be refreshed when the service widget is exposed for the second time.

Optionally, when the refresh frequency information includes the preset time duration and the preset time, the priority of the preset time is higher than the priority of the preset time duration, and the time duration between two adjacent preset times is greater than the preset time duration.

In some embodiments, the display configuration file further includes size information of the service widget, and the size information includes at least one size supported by the service widget. When displaying the service widget, any size of the at least one size supported by the service widget can be adaptively adopted. For example, the size can be 2 × 2, 4 × 2, or other sizes.

Step S102, the service widget is displayed based on the widget package content.

After the widget package content is obtained, since the widget package content includes various information required for displaying the service widget, the service widget can be displayed based on the widget package content.

In the method provided in the embodiment of the present disclosure, since the widget package content of the service widget includes the widget file and the display configuration file, the widget package content includes the widget file and the display configuration file, the widget file includes description information of the display template of the service widget, and the display configuration file includes data source information and refresh frequency information of the service widget, and various information required for displaying the service widget is compiled in the widget package content, when displaying the service widget, there is no need to separate the UI and logic related descriptions from the widget package content and render the UI and execute the logic separately according to the descriptions, but instead the display can be performed directly based on the widget package content, which makes the display process of the service widget simpler and more flexible.

In the embodiment of the present disclosure, a second application is an application for managing the service widget, for example, the second application is a system application, a desktop application, a lock screen application, etc. In order to reduce the association between the service widget and the second application and reduce the impact of the service widget on the stability of the second application, the widget running engine and the second application are decoupled, that is, the widget running engine is not embedded in the second application, but runs independently of the second application. In this case, when displaying the service widget, the second application needs to interact with the widget running engine, which is explained below by way of an embodiment shown in FIG. 2.

FIG. 2 is a flow chart of a method for displaying a service widget according to an illustrative embodiment, which is performed by an electronic device. Referring to FIG. 2, the method includes the following steps.

Step S201, a widget display instruction is generated and sent to a widget running engine through a second application.

The widget display instruction may include a widget identifier of the service widget to be displayed.

In some embodiments, in response to a target operation, the widget display instruction corresponding to the target operation is generated through the second application. The target operation may be an operation requiring display of the service widget, such as a service widget creation operation, a display operation, or a refresh operation.

Step S202, in response to the widget display instruction, widget package content is obtained from a preset server through the widget running engine.

The preset server stores the widget package content of each service widget of a plurality of service widgets. For example, the preset server can be a widget storage cloud service or other server that can store the widget package content. For the information contained in the widget package content, reference is made to the above step S101, which will not be repeated here.

In some embodiments, in response to the widget display instruction, an obtaining request is sent to the preset server through the widget running engine sends, and the obtaining request carries the widget identifier of the service widget to be displayed; and the widget package content sent by the preset server based on the obtaining request is received through the widget running engine.

Step S203, a rendering instruction is generated based on the widget package content and sent to the second application through the widget running engine.

The rendering instruction includes information required to display the service widget.

In some embodiments, after obtaining the widget package content through the widget running engine, the widget package content is parsed through the widget running engine to obtain the widget file and the display configuration file; the target data to be displayed in the service widget is obtained based on the display configuration file; and the rendering instruction is generated based on the target data and the widget file. For example, if the service widget is a weather widget, the target data may be information indicating the current weather and temperature; and if the service widget is a music playing widget, the target data may be a name and lyrics of a song currently being played.

Optionally, obtaining the target data to be displayed in the service widget based on the display configuration file includes: calling a target interface according to the refresh frequency information to obtain the target data from the first application or the application server of the first application. For the widget running engine, when the data source information indicates that the provider of the data displayed in the service widget is the first application, it obtains the target data from the first application; when the data source information indicates that the provider of the data displayed in the service widget is the application server of the first application, it obtains the target data from the application server; when the data source information indicates that the providers of the data displayed in the service widget include the first application and the application server, considering that the first application is an application currently installed on the electronic device, it is more convenient and faster to obtain data from the first application than to obtain data from the application server. Therefore, the first application can be used as the provider, and of course, the application server can also be used as the provider.

In addition, it should be noted that, for the current moment, the target interface is called at the current moment to obtain the target data, and then the target data is obtained according to the refresh frequency information. For example, the target data is obtained at the current moment, and then the target data is obtained every 10 seconds starting from the current moment.

Optionally, generating the rendering instructions based on the target data and the widget file includes: merging the target data into the display template to obtain a template to be rendered; and generating the rendering instruction based on the template to be rendered. Since the target data and the display template are separate, in order to obtain a complete service widget, the target data needs to be merged into the display template. Optionally, the target data is merged into the display template according to the format represented by the data format information.

Optionally, the display configuration file also includes size information of the service widget. In this case, generating the rendering instruction based on the template to be rendered includes: generating the rendering instruction based on the size information and the template to be rendered. The size information indicates a size of the template to be rendered.

Step S204, in response to the rendering instruction, the service widget is rendered through the second application program to obtain the rendered service widget and the rendered service widget is displayed through the second application program.

It should be noted that the embodiments of the present disclosure only illustrate displaying the service widget based on the widget package content. In some embodiments, after displaying the service widget, operations such as a destruction operation, a hiding operation or the like on the service widget to cancel the display of the service widget can also be performed. When performing these operations, the destruction and hiding of the service widget are also implemented through the interaction between the second application and the widget running engine, which will not be detailed in the embodiments of the present disclosure.

In display method of the service widget provided by the embodiments of the present disclosure, from the perspective of the second application, since the second application is decoupled from the widget running engine, the association between the service widget and the second application is reduced, and the impact of the service widget on the stability of the second application is reduced. From the perspective of the service widget, since the second application is decoupled from the widget running engine, the second application does not need to be bound with the service widget, the second application and the service widget are independent of each other, the two do not need to be released together, and the service widget can be released separately, which is more flexible, and conducive to developers to update the service widget at any time.

In addition, since grammar such as quick application grammar and quick application-like grammar that is easy to read and write is used in compiling the widget package content of the service widget, and the service widget itself has no logic, the widget running engine does not need to adopt a specific language engine. The widget running engine is a lightweight running engine, which makes the overall operation of the widget running engine lighter and occupies less content.

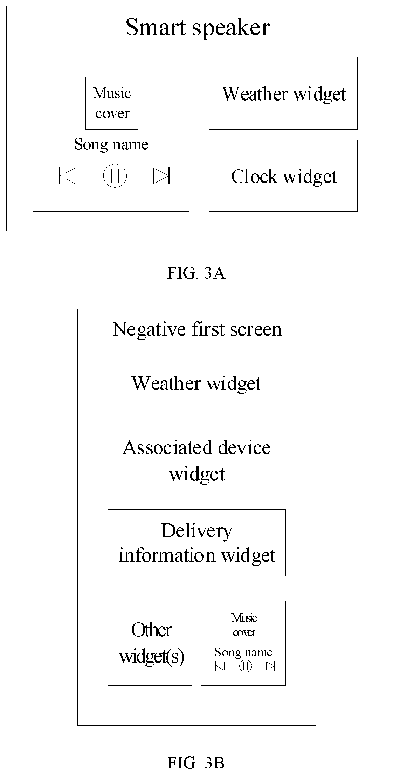

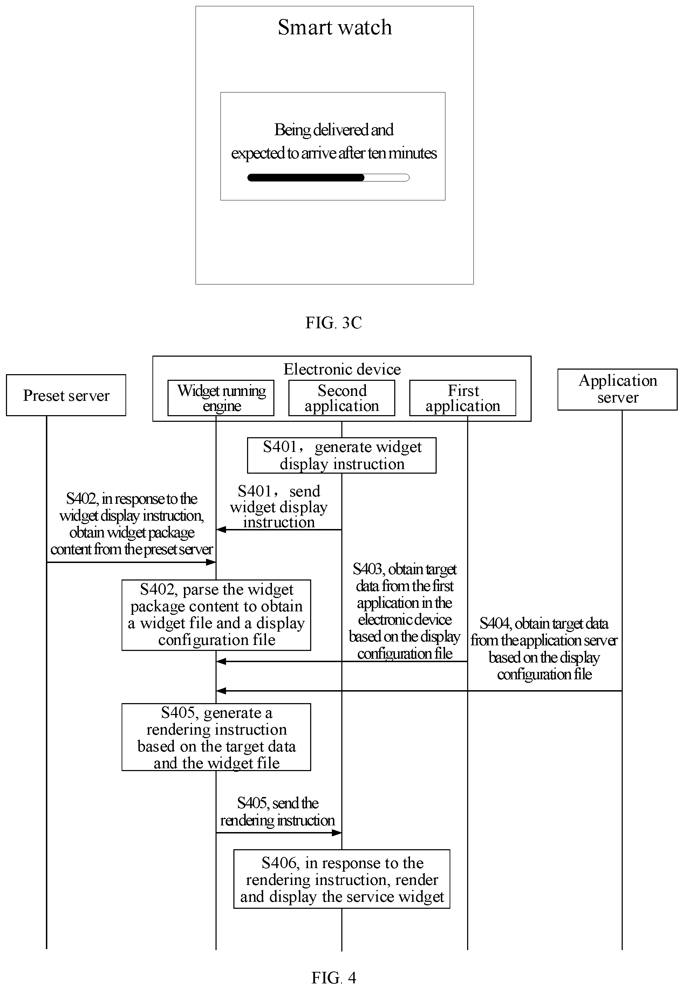

In addition, since grammar such as quick application grammar and quick application-like grammar that is easy to read and write is used in compiling the widget package content of the service widget, the service widget can be quickly compiled, which is conducive to expanding the application scenarios of the service widget and realizing the display of the service widget on multiple devices. In an example, referring to the schematic diagrams of the service widget shown in FIGS. 3A -3C, FIG. 3A is a schematic diagram of displaying a music widget, a weather widget, and a clock widget on a smart speaker; FIG. 3B is a schematic diagram of displaying a weather widget, a delivery information widget, a music widget, and an associated device widget on a negative first screen of a mobile phone; and FIG. 3C is a schematic diagram of displaying a takeaway progress display widget on a smart watch.

In some embodiments, in addition to the electronic device, a preset server and an application server are also involved in the display process of the service widget. The interaction process among the electronic device, the preset server and the application server is described below by way of an embodiment shown in FIG. 4.

FIG. 4 is a flow chart of a method for displaying a service widget according to an illustrative embodiment, which is interactively executed by an electronic device, a preset server, and an application server. Referring to FIG. 4, the method includes the following steps.

Step S401, a second application in the electronic device generates a widget display instruction and sends the widget display instruction to a widget running engine in the electronic device.

Step S402, in response to the widget display instruction, the widget running engine in the electronic device obtains widget package content from the preset server, parses the widget package content to obtain a widget file and a display configuration file, and then executes step S403 or step S404.

Step S403, the widget running engine in the electronic device obtains target data from a first application in the electronic device based on the display configuration file, and then executes step S405.

Step S404, the widget running engine in the electronic device obtains target data from the application server based on the display configuration file, and then executes step S405.

Step S405, the widget running engine in the electronic device generates a rendering instruction based on the target data and the widget file, and sends the rendering instruction to the second application in the electronic device.

Step S406, in response to the rendering instruction, the second application in the electronic device renders and displays the service widget.

For the implementations of steps S401 -S406, reference can be made to the above embodiment shown in FIG. 2, which will not be described in detail here.

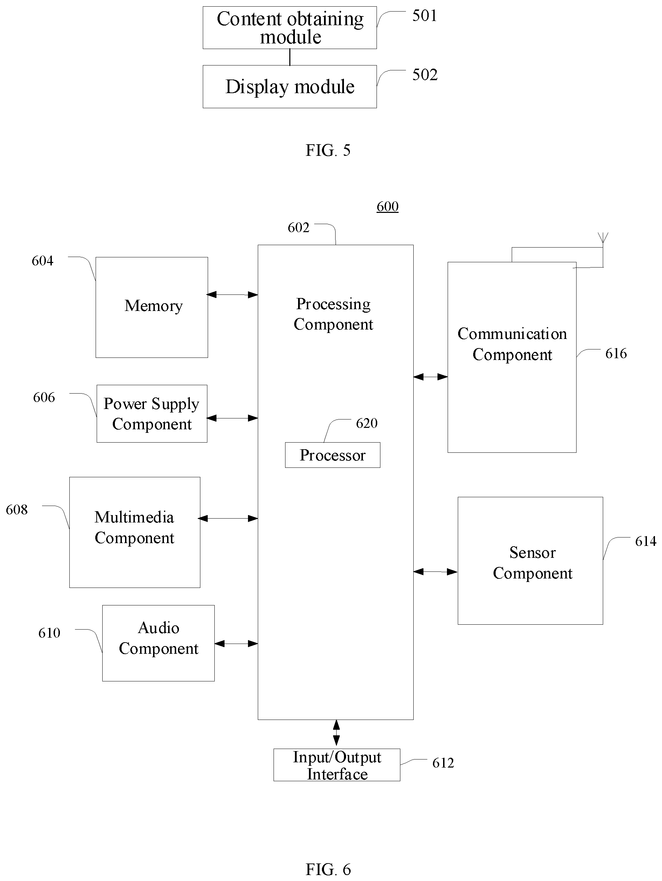

FIG. 5 is a block diagram of an apparatus for displaying a service widget according to an illustrative embodiment, which is configured in an electronic device. Referring to FIG. 5, the apparatus includes:
a content obtaining module 501, configured to obtain widget package content of a service widget to be displayed; where the widget package content includes a widget file and a display configuration file, the widget file is used to describe a display template of the service widget, and the display configuration file is used to describe a data source, a refresh frequency and a widget size of the service widget; and
a display module 502, configured to display the service widget based on the widget package content.

In some embodiments, the description information includes at least one of template information, style information, and data format information, the template information is used to characterize a component in the service widget; the style information is used to characterize a style of the component in the service widget; and the data format information is used to characterize a format of data in the service widget.

In some embodiments, the data source information includes a target interface, which is an interface for obtaining data displayed in the service widget; the refresh frequency information includes at least one of a preset time duration for refreshing data of the service widget and a preset time for scheduled data refreshing.

In some embodiments, when a provider of the data displayed in the service widget is a first application, the target interface is an interface for obtaining the data from the first application, and the data source information further includes application information of the first application, and the application information includes an application identifier and version information; and
when the provider of the data displayed in the service widget is an application server of the first application program, the target interface is an interface for obtaining the data from the application server.

In some embodiments, the content obtaining module 501 is configured to:
generate a widget display instruction and send the widget display instruction to a widget running engine through a second application; where the second application is an application for managing the service widget; and
in response to the widget display instruction, obtain the widget package content from a preset server through the widget running engine; where the preset server stores the widget package content of each service widget of a plurality of service widgets.

In some embodiments, the display module 502 is configured to:
generate a rendering instruction based on the widget package content and send the rendering instruction to the second application through the widget running engine; where the rendering instruction includes information required for displaying the service widget; and
in response to the rendering instruction, rendering the service widget to obtain the rendered service widget and display the rendered service widget through the second application.

In some embodiments, the display module 502 is configured to:
parse the widget package content to obtain the widget file and the display configuration file;
obtain target data to be displayed in the service widget based on the display configuration file; and
generate the rendering instruction based on target data and the widget file.

In some embodiments, the data source information includes a target interface, which is an interface for obtaining data displayed in the service widget; and the display module 502 is configured to:
according to the refresh frequency information, calling the target interface to obtain the target data from a first application or an application server of the first application.

In some embodiments, the display module 502 is configured to:
merge the target data into the display template to obtain a template to be rendered; and
generate the rendering instruction based on the template to be rendered.

In some embodiments, the display configuration file further includes size information of the service widget; and the display module 502 is configured to:
generate the rendering instructions based on the size information and the template to be rendered.

Regarding the apparatus in the above embodiment, the specific manner in which the modules perform operations has been described in detail in the method embodiments, and will not be detailed here.

An embodiment of the present disclosure further provides an electronic device, including a processor and a memory configured to store instructions executable by the processor; where the processor is configured to perform the method for displaying the service widget display in the above embodiments.

FIG. 6 is a block diagram of an electronic device 600 according to an illustrative embodiment.

Referring to FIG. 6, the electronic device 600 may include one or more of the following components: a processing component 602, a memory 604, a power supply component 606, a multimedia component 608, an audio component 610, an input/output (I/O) interface 612, a sensor component 614, and a communication component 616.

The processing component 602 generally controls the overall operation of the electronic device 600, such as operations associated with display, phone calls, data communications, camera operations, and recording operations. The processing component 602 may include one or more processors 620 to execute instructions to complete all or part of the steps of the above methods. In addition, the processing component 602 may include one or more modules to facilitate interaction between the processing component 602 and other components. For example, the processing component 602 may include a multimedia module to facilitate the interaction between the multimedia component 608 and the processing component 602.

The memory 604 is configured to store various types of data to support operations on the electronic device 600. Examples of such data include instructions for any application or method operating on the electronic device 600, contact data, phone book data, messages, pictures, videos, etc. The memory 604 can be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 606 provides power to various components of the electronic device 600. The power supply component 606 may include a power management system, one or more power supplies, and other components associated with generating, managing, and distributing power to the electronic device 600.

The multimedia component 608 includes a screen that provides an output interface between the electronic device 600 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor may not only sense the boundaries of the touch or slide action, but also detect the duration and pressure associated with the touch or slide operation. In some embodiments, the multimedia component 608 includes a front camera and/or a rear camera. When the electronic device 600 is in an operating mode, such as a shooting mode or a video mode, the front camera and/or the rear camera may receive external multimedia data. The front camera and rear camera each may be a fixed optical lens system or have a focal length and optical zoom capability.

The audio component 610 is configured to output and/or input audio signals. For example, the audio component 610 includes a microphone (MIC), and when the electronic device 600 is in an operation mode, such as a call mode, a recording mode, and a voice recognition mode, the microphone is configured to receive an external audio signal. The received audio signal can be further stored in the memory 604 or sent via the communication component 616. In some embodiments, the audio component 610 also includes a speaker for outputting audio signals.

The I/O interface 612 provides an interface between the processing component 602 and peripheral interface modules, such as a keyboard, a click wheel, buttons, etc. These buttons may include but are not limited to: a home button, a volume button, a start button, and a lock button.

The sensor component 614 includes one or more sensors for providing various aspects of status assessment for the electronic device 600. For example, the sensor component 614 can detect the open/closed state of the electronic device 600, the relative positioning of the components, such as the display and keypad of the electronic device 600, and the sensor component 614 can also detect the position change of the electronic device 600 or a component of the electronic device 600, the presence or absence of contact between the user and the electronic device 600, the orientation or acceleration/deceleration of the electronic device 600, and the temperature change of the electronic device 600. The sensor component 614 may include a proximity sensor configured to detect the presence of a nearby object without any physical contact. The sensor component 614 may also include an optical sensor, such as a CMOS or CCD image sensor, for use in imaging applications. In some embodiments, the sensor component 614 may also include an acceleration sensor, a gyroscope sensor, a magnetic sensor, a pressure sensor, or a temperature sensor.

The communication component 616 is configured to facilitate wired or wireless communication between the electronic device 600 and other devices. The electronic device 600 can access a wireless network based on a communication standard, such as WiFi, 2G or 3G, or a combination thereof. In an illustrative embodiment, the communication component 616 receives a broadcast signal or broadcast-related information from an external broadcast management system via a broadcast channel. In an illustrative embodiment, the communication component 616 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an illustrative embodiment, the electronic device 600 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above methods.

In an illustrative embodiment, a non-transitory computer-readable storage medium including instructions is also provided, such as a memory 604 including instructions, and the instructions can be executed by the processor 620 of the electronic device 600 to perform the above methods. For example, the non-transitory computer-readable storage medium can be a ROM, a random access memory (RAM), a CD-ROM, a magnetic tape, a floppy disk, an optical data storage device, etc.

An embodiment of the present disclosure further provides a non-transitory computer-readable storage medium, and instructions in the storage medium, when being executed by a processor of an electronic device, enable the electronic device to perform the method for displaying the service widget in the above embodiments.

An embodiment of the present disclosure further provides a computer program product, including a computer program which, when being executed by a processor, implements the method for displaying the service widget in the above embodiments.

The specification and examples are to be considered illustrative only, and the true scope and spirit of the present disclosure are indicated by the following claims.

## Claims

1. A method for displaying a service widget, comprising:
obtaining (S101) widget package content of a service widget to be displayed; wherein the widget package content includes a widget file and a display configuration file, the widget file comprises description information of a display template of the service widget, and the display configuration file comprises data source information and refresh frequency information of the service widget; and
displaying (S102) the service widget based on the widget package content.

2. The method for displaying the service widget according to claim 1, wherein the description information comprises at least one of template information, style information and data format information, the template information is used to characterize a component in the service widget; the style information is used to characterize a style of the component in the service widget; and the data format information is used to characterize a format of data in the service widget.

3. The method for displaying the service widget according to claim 1 or 2, wherein the data source information comprises a target interface, the target interface is an interface for obtaining data displayed in the service widget, the refresh frequency information comprises at least one of a preset time duration for refreshing the data in the service widget and a preset time for scheduled data refreshing.

4. The method for displaying the service widget according to claim 3, wherein,
in a case where a provider of the data displayed in the service widget is a first application, the target interface is an interface for obtaining the data from the first application, the data source information further comprises application information of the first application, and the application information comprises an application identifier and version information; and
in a case where the provider of the data displayed in the service widget is an application server of the first application, the target interface is an interface for obtaining the data from the application server.

5. The method for displaying the service widget according to any one of the preceding claims , wherein obtaining the widget package content of the service widget to be displayed comprises:
generating (S201) a widget display instruction and sending the widget display instruction to a widget running engine through a second application, wherein the second application is an application for managing the service widget; and
in response to the widget display instruction, obtaining (S202) the widget package content from a preset server through the widget running engine, wherein the preset server stores the widget package content of each service widget of a plurality of service widgets.

6. The method for displaying the service widget according to claim 5, wherein displaying the service widget based on the widget package content comprises:
generating (S203) a rendering instruction based on the widget package content and sending the rendering instruction to the second application through the widget running engine, wherein the rendering instruction comprises information required for displaying the service widget; and
in response to the rendering instruction, rendering (S204) the service widget to obtain the rendered service widget and display the rendered service widget through the second application.

7. The method for displaying the service widget according to claim 6, wherein generating the rendering instruction based on the widget package content comprises:
parsing the widget package content to obtain the widget file and the display configuration file;
obtaining target data to be displayed in the service widget based on the display configuration file; and
generating the rendering instruction based on the target data and the widget file.

8. The method for displaying the service widget according to claim 7, wherein the data source information comprises a target interface, the target interface is an interface for obtaining the data displayed in the service widget; and obtaining the target data to be displayed in the service widget based on the display configuration file comprises:
according to the refresh frequency information, calling the target interface to obtain the target data from a first application or an application server of the first application.

9. The method for displaying the service widget according to claim 7 or 8, wherein generating the rendering instruction based on the target data and the widget file comprises:
merging the target data into the display template to obtain a template to be rendered; and
generating the rendering instruction based on the template to be rendered.

10. The method for displaying the service widget according to claim 9, wherein the display configuration file further comprises size information of the service widget, and generating the rendering instruction based on the template to be rendered comprises:
generating the rendering instruction based on the size information and the template to be rendered.

11. An apparatus for displaying a service widget, comprising:
a content obtaining module (501), configured to obtain widget package content of a service widget to be displayed, wherein the widget package content comprises a widget file and a display configuration file, the widget file comprises description information of a display template of the service widget, and the display configuration file comprises data source information and refresh frequency information of the service widget; and
a display module (502), configured to display the service widget based on the widget package content.

12. A non-transitory computer-readable storage medium, wherein instructions in the storage medium, when being executed by a processor of an electronic device, enable the electronic device to perform the method for displaying the service widget according to any one of claims 1 to 10.

13. A computer program product, comprising a computer program, wherein the computer program, when being executed by a processor, implements the method for displaying the service widget according to any one of claims 1 to 10.
